# EUROPÄISCHE PATENTSCHRIFT

(11) **EP 3 297 759 B1**
(45) Veröffentlichungstag und Bekanntmachung des Hinweises auf die Patenterteilung: **03.09.2025**
(21) Anmeldenummer: 16729997.3
(22) Anmeldetag: 23.05.2016
(51) Int. Cl.: B01J 37/02, B01J 37/08, B01J 23/10, B01J 21/18, B01J 21/08, B01J 35/56, F01N 3/022, F28F 7/02, B33Y 80/00, B33Y 10/00, F01N 3/28, F24S 10/80

(54) **MEHRSTUFIGER KÖRPER MIT EINER VIELZAHL VON STRÖMUNGSKANÄLEN, HERSTELLUNG UND VERWENDUNG**
MULTILEVEL BODY HAVING A PLURALITY OF FLOW CHANNELS, PREPARATION AND USE
CORPS À PLUSIEURS ÉTAGES COMPORTANT UNE PLURALITÉ DE CANAUX D'ÉCOULEMENT, PRÉPARATION ET UTILISATION

(30) Priorität: 22.05.2015 CH 7192015
(43) Veröffentlichungstag der Anmeldung: 28.03.2018
(73) Patentinhaber: Exentis Knowledge GmbH, 5608 Stetten (CH)
(72) Erfinder: BAUER, Hans-Jörg, 56422 Wirges (DE); BAUER, Elke, 56422 Wirges (DE)
(74) Vertreter: Wenzel Nemetzade Warthmüller Patentanwälte Part mbB
(86) Internationale Anmeldenummer: PCT/IB2016/053006
(87) Internationale Veröffentlichungsnummer: WO 2016/189447

(56) Entgegenhaltungen:
- EP-A1- 0 191 982
- EP-A2- 0 250 166
- EP-B1- 1 368 171
- DE-A1- 102007 018 239
- DE-A1- 3 904 550
- DE-C1- 19 830 342
- DE-U1- 202006 007 876
- JP-U- S 491 548

## Beschreibung

### TECHNISCHES GEBIET

Die Erfindung betrifft ein mehrstufiger Körper nach dem Patentanspruch

### STAND DER TECHNIK

Die Entwicklung von Katalysatoren und Russpartikelfiltern hat eine Reihe von geometrischen Kanalstrukturen hervorgerufen die im Wesentlichen mittels Strangpressverfahren hergestellt werden und eine monolithische Struktur aufweisen. Diese meist keramischen Körper haben über ihre Länge eine Kanalform und begünstigen laminare Strömungen, welche sich nachteilig auf den Wandkontakt der zu reinigenden Abgasströme auswirkt. Dem gegenüber stehen die aus Keramik- oder Metallfolie gewickelten Katalysatorträger, welche über gestanzte und gebogene Wandsegmente verfügen können, in der Summe jedoch eine monolithische Struktur aufweisen und vor allem nur eine geringe Wandoberfläche zur Aufnahme der Katalysatorsubstanz anbieten. Bekannt sind auch mechanisch über das Katalysator- oder Filtergehäuse miteinander verbundene monolithische Körper, beispielsweise bei Kombinationskörpern mit unterschiedlichen Katalysatoren, welche durch den Einpackdruck im Katalysator- oder Filtergehäuse meist über eine thermisch quellende Isolationsschicht mehr oder weniger stabil an ihrer Position gehalten werden.

Während diese Systeme meistens mittels wash-coat Verfahren eine den Katalysator aufnehmende Binderschicht aufweisen, sind auch die direkte Beschichtung der keramischen monolithischen Kanäle mit Katalysator bekannt und Stand der Technik. Dabei ist die Beschichtung selbst hier nicht Gegenstand und kann aus dem veröffentlichen Stand der Technik herangezogen werden.

DE 198 30 342 C1, DE 39 04 550 A1 und JP S49 1548 U offenbaren Körper mit einer Vielzahl von Strömungskanälen.

### AUFGABE DER ERFINDUNG

Aufgabe der Erfindung ist die Entwicklung einer neuen Generation von Katalysatorträgern und Filtern mit gegenüber dem Stand der Technik optimiertem Strömungsverhalten der durch den Träger geleiteten Medien, zusätzlich optimiert im Strömungsmediengegendruck und in der Strömungsmedientemperatur nach Möglichkeit ausführbar sowohl in Keramik als auch in Metall, Glas, Kunststoff oder in Kompositen, jeweils geeignet für die Direktbeschichtung mit Katalysator oder / und mittels einer Zwischenschicht in Form eines sogenannten wash-coat.

Diese Aufgabe wird durch einen mehrstufigen Körper für Katalysatoren mit den Merkmalen des Patentanspruchs 1 gelöst.

Erfindungsgemäß stellt sich die Lösung der Optimierung der Wandkontakte des Medienvolumenstromes bei Katalysatoren und Filtern, vor allem bei Anwen-dungen im Heißgasbetrieb wie bei Verbrennungsmotorenabgasen dahingehend dar, dass es sich nicht nur um eine singuläre Strukturoptimierung in Form von Wandstärkenabweichungen, geometrischen Kanalformen wie Viereck, Rechteck, Rund- oder Hexagonform handeln kann, sondern, dass es einer multifunktionalen Strukturoptimierung bedarf, welche die Gesichtspunkte der Turbulenzen in der Strömung innerhalb eines Medienströmungskanals, der damit verbundenen Unterbindung von laminaren Wegstrecken und Strömungsblockaden, den damit verbundenen Druckunterschieden zwischen Eintritt und Austritt des Medienvolumenstromes aus dem Körper, auch als Druckverlust bezeichnet, der Maximierung der Wandkontaktrate des Medienvolumenstroms und der Differenzen an Volumenstrom, Mediengeschwindigkeit und Differenztemperaturen über den Trägerquerschnitt, berücksichtigt und konstruktiv löst.

Mit der Entwicklung der generativen Fertigungsmethoden sind neue Gestaltungsfreiheitsgrade entstanden, die über die Stereolithographie, der Filamentdrucker, der Pulverbettdrucker und der selektiven Lasersinter- und Schmelzverfahren für Prototypen und kleine Stückzahlen bis hin zum 3-dimensionalen Siebdruck für die Serienfertigung zu neuen Optimierungen der Kanalgeometrien führen.

In der Summenbetrachtung einzelner Strömungskanäle innerhalb eines Katalysatorträgers hat es sich gezeigt, dass bei konventionellen monolithischen Strukturen lediglich in der ersten Eintrittsphase des Abgasvolumenstromes turbulente Bereiche auftreten können, die aber nur wenige mm in die Kanaltiefe wirken. Daran anschließend ist bis zum Austritt des Abgasvolumenstromes die Strömung weitestgehend laminar und lediglich in unmittelbarer Nähe des Volumenstromes an der Kanalwandung leicht gestört. Ist hier die Wand strömungstechnisch rau ausgestaltet, treten vor allem bei erhöhter Temperatur sogenannte Strömungsblockaden auf; dadurch bedingt müssen die lichten Kanalweiten groß gewählt werden, mit folgenden deutlich reduzierten Kanalwandoberflächen. Auch kann sich der Abgasvolumenstrom, einmal in einen Kanal eingetreten, nicht mehr ändern. Dies ist vor allem bei nicht gleichmäßiger Verteilung des Abgasvolumenstroms vor dem Eintritt in den Körper nachteilig, da dies einmal bei geringem Volumenstromanteil zu einer Unterlastung des Kanals führt, und damit die katalytische Wirksamkeit nur teilweise ausgenutzt werden kann, im anderen Fall bei großen Volumenstromanteil es zu einer Überlastung des Kanals kommt, und damit zu einer die Gefahr des Austritts ungereinigter Abgase und möglicherweise sogar zu Strömungsblockaden kommt wodurch die katalytische Wirksamkeit dieses Kanals gegen Null geht.

Diesen Defiziten konnte erfindungsgemäß eine vollständig neue Aufbauart des Katalysator- oder Filterkörpers Rechnung tragen, welcher nach Beschichtung mit einer katalytischen Substanz jeweils im Einzelkanal und im Körper die Parameter turbulenter Anteil an Abgasvolumenstrom, erhöhter Wandkontakt des Abgasvolumenstroms, Vergleichmäßigung des Volumenstroms über den Körperquerschnitt, Vergleichmäßigung des Temperaturprofils über den Körperquerschnitt, Minimierung der Strömungsblockadegefahr, Verminderung der regionalen Überhitzungsgefahr verbessert und letztendlich eine Verringerung der Körperdimension durch höhere Wirksamkeit ermöglicht. Die neuartige Konstruktion bietet die Möglichkeit der Veränderung der äußeren Bauteilgeometrie, da durch den niedrigeren Abgasgegendruck bei verringertem Körperquerschnitt die Länge erhöht werden kann, ohne dass es zu einem Leistungsverlust kommt. Damit können die Verweildauer des Abgasvolumenstroms im katalytisch wirksamen Körperbestandteil deutlich verlängert werden, ohne die Reduzierung des Volumenstroms oder Erhöhung des Gegendruckes zu bewirken. Die neue Konstruktion ermöglicht neben einer Vielzahl von Einzelkanalgeometrien, vom Viereck, Rechteck, Hexagon, Ellipse und Kreis, die Anwendung von dichten Materialien, von porösen Materialien, von Keramiken, Metallen, Gläsern, Kunststoffen und Kompositen bei freier Gestaltung der äußeren Geometrie des Körpers auch die Kombination von sich ändernden Kanalgeometrien in Querrichtung, der X- und Y- Achse, als auch in Längsrichtung, der Z- Achse. Konstruktiv neu ist, dass die Segmente des Körpers in Z- Richtung funktional kurz ausgelegt sind um die Bildung laminarer Strömungen zu unterbinden.

### BESCHREIBUNG DER ERFINDUNG

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: zwei übereinanderliegend angeordnete Filterkörper,
- Fig. 2: vier Filterkörper in Obenansicht, welche in Versatz zueinander angeordnet sind,
- Fig. 3: eine Draufsicht auf zwei dreigeteilte Strömungskanäle, und
- Fig. 4: die Materialauswahl für mögliche Einsatzgebiete.

In den Figuren sind für dieselben Elemente jeweils dieselben Bezugszeichen verwendet worden und erstmalige Erklärungen betreffen alle Figuren, wenn nicht ausdrücklich anders erwähnt.

In der nachstehenden Tabelle sind die wesentlichsten Parameter des neuen Körpers exemplarisch gegenüber dem Stand der Technik dargestellt:

| **Funktion** | **in Kanallängsrichtung** | **in Kanalquerrichtung** | **in Körperquerachse** | **in Körperlängsachse** |
|---|---|---|---|---|
| Strömungsart | turbulent | turbulent | turbulent | turbulent |
| Reaktoroberfläche | hoch | hoch | hoch | hoch |
| katalytische Wirksamkeit | hoch | hoch | hoch | hoch |
| Strömungsrichtungen | X,Y-Z | X,Y-Z | X-Y | Z |
| Volumenstrom im Kanal | verschieden | verschieden | ./. | ./. |
| Volumenstrom im Körper | ./. | ./. | verteilt | verteilt |
| Druckverlust | gering | ./. | ./. | gering |
| Temperaturverteilung | homogen | homogen | homogen | homogen |
| Druckstoßempfindlichkeit | gering | gering | gering | gering |
| Überhitzungsgefahr | gering | gering | gering | gering |
| Unterkühlungsgefahr | gering | gering | gering | gering |
| Strömungsblockaden | gering | gering | gering | gering |
| mechanische Festigkeit | hoch | hoch | hoch | hoch |

Grundlage der Erfindung ist auch die Erkenntnis, dass der in einen konventionellen Kanal eintretende Volumenstrom lediglich wenige mm in Z-Richtung Turbulenzen aufweist, die groß genug sind, einen innigen Wandkontakt und Durchmischung hinter der Eintrittsphase hervorzurufen und bereits nach dieser kurzen Wegstrecke in Z-Achsrichtung mehr laminaren Charakter annimmt und die mögliche katalytische Wirksamkeit kontinuierlich wegen der zunehmenden laminaren Strömungsform über die Längsachse abnimmt.

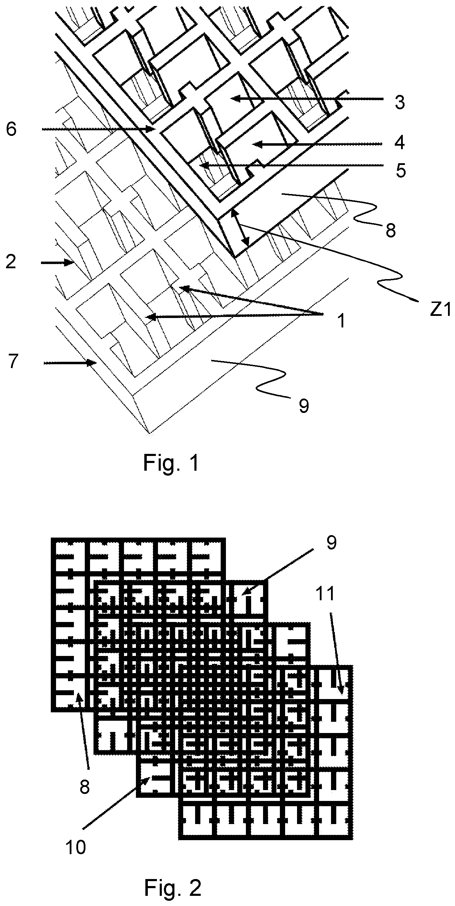

Der Katalysator, Filterkörper oder Reaktorkörper 8 und 9 in Figur 1 weist Flächen auf, welche in Strömungsrichtung zu Turbulenzen führen, die auf der Volumenstromeintrittseite als Prallflächen 1 und an der Volumenstromaustrittseite als Stromabrisskanten 2 wirken. Die Prallflächen 1 und Prallkanten 2 sind dabei so angeordnet, dass sie nicht mehr als 75 Prozent des Querschnittes des einzelnen Strömungskanals einnehmen. Vorzugsweise aber nicht ausschließlich hat es sich bei mehr oder weniger rechteckig, quadratischen oder hexagonal geformten einzelnen Strömungskanälen oder Einzelkanälen, möglich auch bei runden oder elliptischen oder frei geformten Einzelkanalgeometrien, gezeigt, dass die Prallflächen 1 und Abrisskanten 2 derart angeordnet sind, dass sich im Einzelkanal strömungstechnische Unterkanäle 3, 4 und 5 bilden.

In der einfachsten Ausgestaltung bildet ein Versatz von zwei Filterkörpern 8 und 9 in Figur 2 dazu, dass ein Einzelkanal in Durchflussrichtung nach einer Teilstrecke Z1 bereits selbst Prallflächen 1 und Abrisskanten 2 bildet. Damit ergibt sich, dass der Katalysator- Filter oder Reaktorkörper 20 in Volumenstromrichtung mindestens einmal seine Struktur ändert, dahingehend, dass die Strukturänderung im einfachsten Fall durch einen Versatz der Kanalstrukturen in Durchflussrichtung hervorgerufen wird. Am Beispiel des rechteckigen Einzelkanals, aus dem die Erfindung für andere als rechteckige Kanalquerschnitte geltende Kanalformen hervorgeht, wird der Versatz um ein Verrücken der Kanalebenen um jeweils, aber nicht ausschließlich eine halbe Kanalweite in X- Richtung und in Y- Richtung hervorgerufen. In Figur 2 ist der Versatz mit den vier Filterkörpern 8, 9, 10 und 11 gebildet.

Diese Anordnung im einfachsten Fall bewirkt, dass die Kanalebenen, bezogen auf den Einzelkanal, mit mindestens vier Punktflächen untereinander verbunden sind um die mechanische Körperfestigkeit und die Temperaturleitfähigkeit über die Kanalebenen sicherzustellen.

Überraschenderweise hat es sich herausgestellt, dass bei genügend geringer Ebenentiefe bereits eine nachhaltige turbulente Strömung erzeugt werden kann, ohne dass der Volumenstromgegendruck signifikant steigt. In verschiedenen Versuchen und Simulationen wurde erkannt, dass die Wirksamkeit der Erzeugung turbulenter Strömungen mittels Prallflächen und Abrisskanten, vor allem bei Kanalquerschnitten unterhalb von 5 mm, nicht wesentlich tiefer in Z-Richtung wirken als das 4-fache des Kanaldurchmessers. Dabei liegt bei jeweils dem 2,5-fachen des Kanaldurchmessers ein Strukturwechsel vor. Der Strukturwechsel liegt innerhalb eines Körpers mindestens einmal vor, maximal jedoch unterhalb des X-fachen des 1-fachen Kanaldurchmessers. Vorzugsweise, aber nicht ausschließlich hat es sich für den exemplarisch gewählten rechteckigen Kanal mit einer lichten Kanalweite von 1,5 mm gezeigt, dass ein Strukturwechsel zwischen 2,5 mm und 7,5 mm, vorzugsweise alle 5 mm, den höchsten turbulenzerzeugenden und -erhaltenden Faktor aufweist.

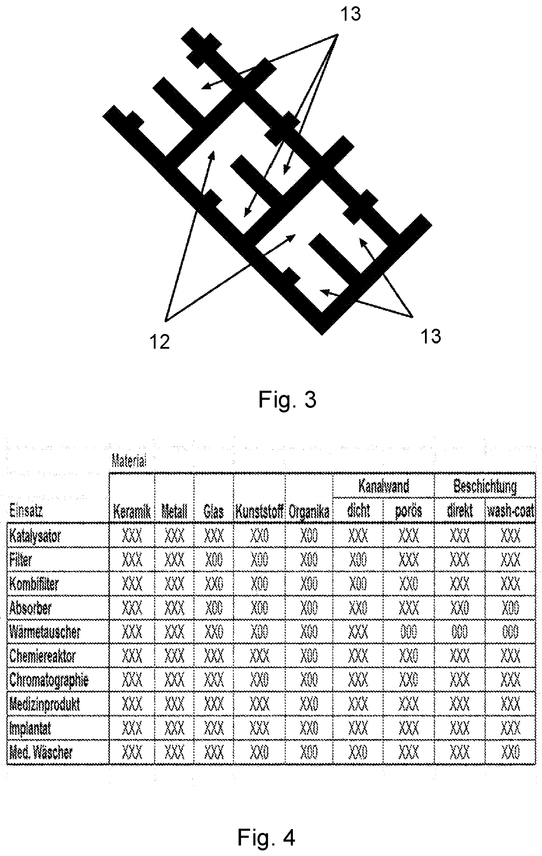

Bei den Überlegungen konnte gefunden werden, dass die sich einstellende Volumenstromteilung bei dem Übergang des Abgasvolumenstroms von einer Strukturebene in die nächste Strukturebene durch die entstehende Querströmung vorteilhaft auf die katalytische Wirkung auswirkt. Weitergehende Überlegungen haben dazu geführt, dass es vorteilhaft ist, die turbulenzerzeugenden Prallflächen 1 derart zu gestalten, dass der Einzelkanal in mehrere Teilkanäle 12 und 13 (siehe Figur 3) aufgeteilt wird, welche aber untereinander in Z-Achsrichtung miteinander in direkter Verbindung stehen. In dem angeführten nicht ausschließlichen Beispiel des rechteckigen Kanalquerschnittes konnte mittels zweier kleiner ausgeführten Prallflächen 1, welche in etwa in Wandstärke in den Strömungskanal ragen und einer Prallfläche 1, welche in etwa hälftig plus hälftiger Wandstärke in den Strömungskanal reichen, eine Dreiteilung des Strömungskanals in den Teilkanälen 12 und 13 erreicht werden. Durch diese exemplarische ausgeführte Aufteilung konnten mehre sich positiv auf die katalytische Wirksamkeit und Strömung auswirkende Effekte generiert werden:
- Vergrößerung der für Reaktionen verfügbaren Wandfläche pro Strömungskanal in Z-Achsrichtung durch Prallflächen und Abrisskantenflächen
- Vergrößerung der für Reaktionen verfügbaren Wandfläche pro Strömungskanalsegment in X,Y- Achsrichtung durch Prallflächen und Abrisskantenflächen
- Vergrößerung der für Reaktionen verfügbaren Wandfläche pro Strömungskanalebene in X,Y- Achsrichtung durch nicht mit Verbindungspunktflächen belegten Kanalaußenwandflächen
- Erhöhung der Verbindungsflächenanzahl zwischen den Strukturebenen von exemplarisch dargestellten vier auf exemplarisch dargestellte acht Verbindungen mit sich einstellender Strukturstabilitätsverbesserung

Auch andere Formen, Dimensionen, Anordnungen und Anzahl der Teilkanäle 12 und 13 sind möglich.

In der Betrachtung des exemplarischen Beispiels ergeben sich bei einer lichten Kanalweite von 1,5 mm, einer Kanalwandstärke von 0,25 mm, zweier Prallflächengröße von 0,25 mm * 0,15 mm einer dritten Prallflächengröße von 0,25 mm * 0,875 mm bei einer Elementtiefe von 5 mm gegenüber einem monolithischen Strömungskanal mit 1,5 mm lichter Kanalweite:

| | |
|---|---|
| Konventionell: | Reaktionsfläche 30 mm² |
| Beispiel neu: | Innenwandfläche 32,75 mm² |

| | |
|---|---|
| + Prallfläche + Abrisskantenfläche 3,25 mm² Summe Reaktionsfläche 36 mm² | |

Damit ist bereits bei dieser einfachen Kanalgestaltung eine Vergrößerung der Reaktionsfläche um mehr als 20 % realisiert, welche konstruktiv weiter vergrößert oder verkleinert werden kann.

Im ausgeführten Beispiel wird durch die Konstruktion mit einem 1,5 mm lichte Weite Kanal ein konventionell 1,2 mm lichte weite Kanal in der verfügbaren Reaktionsfläche dargestellt. Mit der gegenüber dem konventionellen monolithischen Stand der Technik erweiterten lichten Weiten wird der Strömungsquerschnitt nicht durch die additiv integrierten Prallflächen 1 und Abrisskanten beschränkt, so dass vor allem durch die Segmentierung der Strömungskanäle in Z-Achsrichtung der Aufbau laminarer Strömungen verhindert wird, gleichzeitig auch die der Strömungsblockadebildung, ohne dass es zu einer signifikanten Erhöhung des Volumenstromgegendruckes kommen kann.

Der erfindungsgemäße Gedanke der Erzeugung von Turbulenzen trägt dem Umstand Rechnung, dass gerade bei beschränkter äußeren Baugröße, wie in einem Katalysator, ein Maximum an Volumenstromwandkontakt bei kontinuierlicher Mischung des Stromes in alle Richtungen.

Für den turbulenten Strömungsfluss zur Erzeugung einer hohen Wandkontaktrate des Abgasvolumenstroms, der Wandfiltration, der chemischen Aufbereitung beispielsweise als Chromatographiekörper für technische oder medizinische Anwendungen, stehen hier mindestens vier Effekte zur Verfügung:
- ein Effekt für die Turbulenzerzeugung ist das Auftreffen des Abgasvolumenstroms auf die als Prallflächen bezeichneten in den einzelnen Strömungskanal hineinreichenden Flächen. Hier teilt sich der Volumenstrom unter Änderung der Strömungsrichtung in X- und Y- Achsrichtung bei Beibehaltung der Hauptströmungsrichtung in Z-Achsrichtung
- ein weiterer Effekt für die Turbulenzerzeugung ist das Austreten des Abgasvolumenstroms aus den unteren Kanten der Prallflächen. Hier entstehen Strömungsverwirbelungen in X- und Y- Achsrichtung unter Beibehaltung der Hauptströmungsrichtung in Z- Achsrichtung.
- ein weiterer Effekt für die Turbulenzerzeugung ist beim Eintritt in ein Kanalsegment das Auftreffen des Volumenstromes auf die nicht durch Vorkanäle belegte Kanalwand im Sinne einer Prallfläche mit Verteilung des Volumenstroms in jeweils vier angrenzende Einzelkanäle und das Austreten des Volumenstroms aus dem Einzelkanal bei nicht durch Folgekanäle belegte Kanalwand im Sinne einer Abrisskante mit Verteilung des Volumenstroms in jeweils vier angrenzende Einzelkanäle.
- ein weiterer Effekt ist das Volumenstromfließverhalten innerhalb eines Segmentes eines Einzelkanals. Wie im Beispiel nach Figur 3 skizziert setzt sich der Einzelkanal aus jeweils zwei kurzen Prallflächen und eine über die Kanalmitte reichende Prallfläche zusammen. Daraus entstehend bildet sich eine dreifache U-förmige Innenkanalstruktur mit jeweiliger Öffnung zueinander aus. Während in den beiden resultierenden kleineren U-förmigen Kanalsegmenten 13 eine zum U-Boden orientierte Volumenstromabwicklung, begünstigt durch die offene U-Formseite zum Kanalteil 12 mit vermindernden Fließgeschwindigkeit entsteht, wird im Kanalsegment 12 erhöhte Fließgeschwindigkeit mit Wandabwicklung zum U-Boden des Segmentes 12 entstehen, welche durch die Strömungswalze aus den beiden kleineren Kanalsegmenten ebenfalls zu einer Strömungsabwicklung gezwungen wird. Diese Umwälzung durch die Wandreibungen wird durch die Turbulenzen der Prallflächen und Abrisskanten signifikant verstärkt. Bevor sich jedoch eine laminare Strömung einstellen kann, wechselt bereits die Kanalebene mit zusätzlichen Prallflächen durch die Außenwandungen der Kanäle der Folgebene, so dass eine innige Durchmischung des gesamten Volumenstroms innerhalb des Einzelkanals erfolgt.

Die vorangestellten Effekte treten nicht nur wie im ausgeführten Beispiel mit rechteckigen Einzelkanälen auf, sondern können auch auf andere geometrische Ausgestaltungen der Kanalform angewendet werden.

Begünstigt durch die turbulente Strömung in allen Einzelkanälen und Kanalsegmenten wird der gesamte Volumenstrom jeweils beim Übergang in die Folgeebene, vor allem in X- und Y- Achsrichtung des Körpers verteilt.

Daraus resultieren weitere positive Effekte selbst bei ungleichmäßiger Verteilung des Volumenstromes beim Eintritt in den Körper:
- der Abgasvolumenstrom wird innerhalb des Körpers beim Übergang von einer Strukturebene zur nachfolgenden Strukturebene verteilt, wobei die Verteilung in den Stufen aus dem Stromanteil aus Kanal 1 der ersten Ebene in Kanal 1,2,3 und 4 zweiten der Ebene verteilt wird. Der verteilte Volumenstrom aus Kanal 1 wird nach seiner Verteilung in der zweiten Ebene in der dritten Ebene auf die Kanäle 1, 2, 3, 4, 5, 6, 7, 8 und 9 weiter verteilt. Gleichzeitig treten aus den benachbarten Zellen der ersten Ebene die jeweils resultierenden Volumenstromanteile ebenfalls in die nachfolgende Kanalebene ein. Durch die sich bildende Kanaloffenheit durch die Ebenen und den Versatz der Kanäle zueinander erfolgt so ein Volumenstromausgleich über die Körperquerschnitte. Bereits kurz nach Eintritt des Volumenstroms kann der gesamte Körperquerschnitt mit gleichmäßigen Druck- und Volumenverhältnissen bei gleicher mittlerer Strömungsgeschwindigkeit für eine homogene Volumenstromaufbereitung genutzt werden. Ein Druckanstieg in einem einzelnen Kanal kann nicht mehr zu einem Reinigungsverlust führen, da der anteilige Volumenstrom auf die nachfolgenden benachbarten Kanäle ausweichen kann. Der Druckverlust über den Körperquerschnitt wird damit gleichmäßig verteilt und konventionell benachteiligte Körperregionen, vor allem die Körperrandbereiche und das Zentrum des Körpers können nicht mehr über- beziehungsweise unterbelastet werden. In der Folge steigt in dem mehrstufigen Körper 20 der erreichbare Wirkungsgrad.
- mit der dargestellten Volumenstromteilung wird auch zwischen den Kanalebenen im Körperquerschnitt die Temperatur in zweierlei Maß über den Körperquerschnitt homogenisiert. Ein Homogenierungsteil ist die Zuführung von Energie über die Volumenstromverteilung durch die Strömungsverteilung über den Körperquerschnitt, der zweite Homogenisierungsteil ist die Verteilung der durch Reaktionen an den Kanalwandungen entstehende Reaktionswärme. Durch die Vergleichmäßigung des Temperaturprofils über den Körperquerschnitt kann ein Defizit in den Randbereichen, und ein Überschuss in Körpermitte weitestgehend ausgeglichen werden, so dass eine Unterkühlung, beziehungsweise Überhitzung nicht mehr in dem Maß wie beim Stand der Technik zwangsläufig auftreten kann.

Je nach Anwendungserfordernissen kann neben der Anzahl an Prallflächen und Abrisskanten auch deren Größe und Form individuell angepasst werden und auch innerhalb eines Einzelkanals einer Körperebene oder / und zwischen den Körperebenen unterschiedlich ausgestaltet sein. Konstruktiv ist vorzugsweise die rechteckige Kanalform und ein Versatz um je eine halbe Kanalweite in X- und Y- Achsrichtung am sinnvollsten, vor allem bei der Verwendung als Katalysatorträger, möglich ist auch, was in bestimmten Anwendungsfällen vorteilhaft sein kann, ein geringerer oder größerer Versatz, beziehungsweise eine Drehung mit oder ohne Versatz technisch vorteilhaft. Die Anpassung der Prallflächen und Abrisskanten und die Auflagepunktflächen der Ebenenverbindungen sind in ihrer Lage, Form und Anzahl der Ebenenstruktur anzugleichen. Dies wird insbesondere aber nicht ausschließlich durch die Herstellung des Körpers mittels generativer Fertigungsverfahren, insbesondere dem dreidimensionalen Siebdruck, gefolgt vom dreidimensionalen Pulverbettdrucken, dem selektiven Lasersintern und Laserschmelzen und dem Filamentdrucken und weiteren weniger für die Serienfertigung geeigneten Verfahren ermöglicht. In begrenztem Umfang ist für die Modellerstellung ohne technische Erfordernisse der Präzision und Haltbarkeit eine manuelle Zusammenfügung von Ebenscheiben mittels klassischer Fügetechniken, wie Kleben, Dekorieren, Verschraubung, Klemmung, Löten oder Diffusionsschweißen zwar machbar, wirtschaftlich und technisch jedoch für die Stück- oder Serienherstellung ungeeignet.

In Figur 4 ist die Materialität des Körpers für die Auswahl an möglichen Einsatzgebieten dargestellt und mittels dreier Kennzeichen für den neuen Körper bewertet. Dabei ist XXX die Kennzeichnung für unbeschränkt, XXO für meistens, X00 für weniger tauglich und 000 für nicht geeignet. Es versteht sich von selbst, dass die Liste der möglichen Anwendungen und Eignungen lediglich eine exemplarische Auswahl beinhaltet. Verdeutlicht am Beispiel der Implantate welche als Direktbeschichtung, beispielsweise Antibiotika oder Zytostatika aufweisen, oder das wash-coat in Form von Kollagen geeignet ist vitale Zellen als Katalysator für die Wachstumsintegration im Organismus darzustellen. Auch der Chromatographiebereich ist hier in seiner Multifunktionalität anzuführen. Es versteht sich ebenfalls, dass der angeführte Filter weniger für eine Wanddurchtrittsfiltration geeignet ist, sondern vielmehr für eine Oberflächenfiltration, es sei denn, es folgt an die erfindungsgemäße Körpergeometrie ein Bereich mit alternierend verschlossenen Kanälen beziehungsweise liegt vor dieser.

Der mehrstufige Körper, vorzugsweise in der Ausführung als Träger für Katalysatoren, kann aus einer Reihe von Materialien hergestellt werden. Vor allem Keramik, Metall, Glas und Kunststoff kommen in poröser oder dichter Materialform für die technischen Anwendungen in Frage. Kunststoffe und Organika sind dagegen mehr für den Einsatz im Medizinprodukte- und Implantatbereich für den neuen Körper anzusiedeln. Durch die erfindungsgemäße Konstruktion ist es auch möglich, mit jeder Körperebene auch das Material zu wechseln, wenn dies nicht bereits während der Herstellung der Ebenen gemacht wird. Es hat sich gezeigt, dass vor allem für die Anwendung als Katalysatorträger die Kanalform bestens geeignet ist die katalytisch wirksame Substanz aufzunehmen und nachhaltig für die katalytische Reaktion bereit zu stellen. Hier sind sowohl die Methoden der Direktbeschichtung, als auch der Beschichtung mittels Zwischenträgerschicht, dem wash-coat, geeignete Beschichtungsverfahren. Gleiches gilt für chemische Reaktoren und der Verwendung als Chromatographiekörper, bei dem eine definierte Reaktions- und Durchflusssteuerung mit dem neuen Körper ermöglicht wird. Besonders für die sogenannte Biochromatographie, der Blutaufbereitung und Reinigung, sind definierte und vollständige und zeit- volumen- druck- und temperaturidentische Umsetzungsreaktionen von besonderer Bedeutung und werden durch den neuen Körper reproduzierbar ermöglicht, ohne auf statistische Körperverteilungen, wie bei einer Chromatographiekörperschüttung angewiesen zu sein. Durch die Körperform ist es auch möglich, den Körper mehrfach zu recyceln beziehungsweise nach dessen Verwendung zu reinigen und sortenrein zu entsorgen.

Exemplarisch für die verschiedenen Anwendungsgebiete und Dimensionierungen ist nachstehend ein Ausführungsbeispiel für einen Körper zum Einsatz als Katalysatorträger ausgeführt. Aus einer Materialvorlage einer Mischung aus Kordierit- und Siliciumcarbidpulver, angemischt mit einer Additivkombination eine Siebdruckmasse bildend, wird im dreidimensionalen Siebdruck verarbeitet. Das Layout des ersten Formgebungswerkzeuges, dem Drucksieb, beinhaltet eine Reihe von Katalysatorenträgeranordnungen mit der konstruierten ersten Ebene des Trägers und dessen Außenform die Katalysatorträgerkanäle beinhaltende innere Trägerstruktur. Nach dem Druck der ersten Trägerebene in einer Höhe von hier ausgewählten 5,0 mm wird das zweite Formgebungswerkzeug mit der um jeweils ½ Kanalweite in X- und Y- Achsrichtung versetzten und um 90° gedrehten Kanalgeometrie, wobei die Außengeometrie der Körper dieser Druckebene deckungsgleich mit der der ersten Druckebene ist, ebenfalls bis zu einer Höhe von 5,0 mm gedruckt. Auf die resultierende 10 mm Druckhöhe folgt das dritte Formgebungswerkzeug, das vierte Formgebungswerkzeug und so weiter, bis die gesamte Körperhöhe erreicht ist. Der gedruckte Körper wird anschließend separiert und in einem thermischen Sinterverfahren bis zur gewünschten Festigkeit gebrannt. Dabei findet auch die Entbindung der Druckadditive statt. Im vorliegenden Beispiel wird der gebrannte Katalysatorträger, welcher hier mit einem porösen Material ausgeführt ist, mittels Vakuumunterstützung mit einer Lösung Seltene Erden, welche in ihrer Zusammensetzung die katalytische Wirkung aufweisen, getränkt. Nach der Entfernung des Überschussanteils an Katalysator wird dieser in einem weiteren thermischen Brennprozess an die Kompositzusammensetzung des Trägermaterials aus Cordierit und Siliciumcarbid gebunden.

In der geometrischen Ausgestaltung des Beispiels weist der Katalysatorträger einen Außendurchmesser von 100 mm auf. Die äußere Wand des Trägers ist mit einer Wandstärke von 0,5 mm verstärkt gegenüber den Wandstärken der Kanalstrukturen ausgeführt. Die Kanalstrukturen bestehen im ausgeführten Beispiel aus Vierecken mit einer Außenwandstärke von 0,25 mm und einer lichten Kanalweite von 1,5 mm. Während an einer und der gegenüberliegenden Kanalseitenwand ein Prallflächenelement / Abrisskantenelement mittig mit einer Breite von 0,25 mm und einer in den Kanal reichende Tiefe von 0,15 mm angeordnet ist, befindet sich an einer der verbleibenden Kanalwandungen ein Prallflächenelement / Abrisskantenelement mit einer Breite von 0,25 mm und einer über die Kanalmitte reichenden Tiefe von 0,875 mm. Die in der Folgeebene des Körpers anschließenden Kanäle sitzen mit ihren Seitenwandungen dann auf den Mitten der Seitenwände des Vorgängerkanals und der Mitte des langen Prallflächenelementes auf und sind mit diesen durch den anschließenden Sintervorgang fest verbunden. Die so geformten Einzelkanäle weisen neben den Prallflächen 1 und Abrisskanten 2 eine innere Kanalstruktur mit zwei kleinen U-förmigen und einem breiteren gegenüberliegenden U-förmigen Teilkanal auf, wobei die U-förmigen Öffnungen der Teilkanäle jeweils gegeneinander stoßen.

In einer Variante sind die Prallflächenelemente und die Abrisskantenelemente etwas breiter als die nachfolgende Kanalwandungsstärke ausgeführt, so dass hier in den Überlappungsbereichen zusätzliche Versatzebenen, welche turbulenzerhöhend wirken, vorliegen. Dabei ist diese Ausgestaltungsform mehr für langsam fließende Gasströme gedacht, da dort der Zeitfaktor für den Gasdurchtritt durch den Körper in Z-Achsrichtung meist gewünscht ist.

Das angeführte Beispiel lässt sich nun vom Fachmann problemlos auf andere Anwendungen, Materialien, äußere Geometrien, Kanalformen, Innenkanalformen, Prallflächenformen / Abrisskantenformen und deren Anzahl und Dimensionierung, sowie auf unterschiedliche Körperelementhöhen anwenden, ebenso wie die Form und Applikation einer möglichen katalytischen oder reaktiven Beschichtung im Direktbeschichtungs- oder / und wash-coat-Verfahren.

In einem weiteren exemplarischen Beispiel ist ein aus einer Siliciumcarbidmasse, mit entsprechender Sinterung bestehender Absorberkörper dargestellt, welcher seinen Einsatz in der solaren Energiegewinnung, hier vorzugsweise bei den stationären Solarturmkraftwerken und den mobilen Dish-Energieerzeugern hat. In dieser speziellen Ausgestaltungsform ist in der ersten Körperebene die Ausgestaltung der Prallflächenelemente und der Abrisskanten größer dimensioniert als beim Körper für Katalysatoren. Beispielsweise sind dies 0,3 mm Breite der Prallflächenelemente mit einer Tiefe von ebenfalls 0,3 mm, wobei der dritte Prallflächenanteil eine Breite von 0,25 mm und eine Tiefe von 1,25 mm aufweist. Diese Dimensionierung der ersten Körperebene ist vor allem geeignet die solare Energie zu absorbieren und ist entsprechend dünn mit einer Ebenenstärke von 3,5 mm berechnet, da die senkrechte Sonneneinstrahlung kaum tiefer in die Struktur eindringen kann. Die der ersten Körperebene folgenden Körperebenen dienen hier der Wärmeleitung aus der ersten Körperebene und der Übertragung der Wärme an das Durchflussmedium, welches im Falle der Turmkraftwerke meistens Luft ist. Nach Austritt der erwärmten Luft aus dem Absorber wird diese zur konventionel-len Energieerzeugung mittels Turbinentechnik verwendet, beziehungsweise bei einem Überangebot zur Einleitung in Wärmespeicher.

## Patentansprüche

1. Mehrstufiger Körper mit einer Vielzahl von Strömungskanälen, **dadurch gekennzeichnet, dass** dieser in Strömungsrichtung im einzelnen Strömungskanal mindestens eine turbulenzerzeugende, einen nicht geschlossenen Unterkanal bildende, an die Kanalwandung angebundene Fläche aufweist, die bei Strömungseintritt eine Prallfläche (1) und bei Strömungsaustritt eine Abrisskante (2) für die Strömung bildet, dass der Körper mehrere Kanalstrukturen aufweist, die nacheinander in Verbindung stehend angeordnet sind und in Strömungsrichtung zu einander einen stufenförmigen Übergang bilden, wobei die Prallfläche (1) und die Abrisskante (2) so angeordnet sind, dass sie nicht mehr als 75 Prozent des Querschnittes des einzelnen Strömungskanals einnehmen, und dass der Körper durch generative Fertigung hergestellt ist.

2. Mehrstufiger Körper nach Anspruch 1, **dadurch gekennzeichnet, dass** ein Seitenwandelement als Prallfläche (1) in jeden einzelnen Strömungskanal ragt, welches auf der Strömungseintrittsseite die Prallfläche (1) und auf der Austrittseite die Abrisskante (2) bildet und dass die Prallflächen (1) und Abrisskanten (2) dazu dienen, eine turbulente Strömung zu bewirken.

3. Mehrstufiger Körper nach Anspruch 1 oder 2, **dadurch gekennzeichnet, dass** die Kanalwandung als Katalysatorträger mit einer katalytisch wirksamen Substanz der Seltenen Erden direkt und/oder über einen Zwischenträger beschichtet ist.

4. Mehrstufiger Körper nach Anspruch 1 oder 2, **dadurch gekennzeichnet, dass** die Kanalwandung als Katalysatorträger mit einer katalytisch wirksamen Substanz der Übergangsmetalle direkt und/oder über einen Zwischenträger beschichtet ist.

5. Mehrstufiger Körper nach Anspruch 2, **dadurch gekennzeichnet, dass** die Prallflächen (1) und Abrisskanten (2) den einzelnen Strömungskanal in mehr als einen Unterkanal unterteilen, welche untereinander in Verbindung stehen und die zueinander jeweils eine offene Seite haben.

6. Mehrstufiger Körper nach Anspruch 5, **dadurch gekennzeichnet, dass** die in einem Strömungskanal Unterkanäle gebildet sind, die verschieden hohe Wandreibungsanteile aufweisen, welche dazu dienen, um ein Abrollen der Strömung über die Seitenwandungen in Strömungsrichtung zu bewirken.

7. Mehrstufiger Körper nach Anspruch 6, **dadurch gekennzeichnet, dass** die Prallflächen (1) und die Abrisskanten (2) den Strömungskanal in mindestens drei einseitig offene Unterkanäle unterteilen von denen mindestens ein Unterkanalteil eine größere Durchströmungsfläche aufweist als die beiden mindestens verbleibenden Unterströmungskanäle.

8. Mehrstufiger Körper nach einem der Ansprüche 1 bis 7, **dadurch gekennzeichnet, dass** die den Körper bildende Strömungsrichtung (Z) in mehr als eine Ebene aufgeteilt ist und dass jede Kanalposition der Folgeebene gegenüber der Kanalposition der vorangehenden Ebene quer zur Strömungsrichtung in X-Richtung und in Y-Richtung versetzt und/oder verdreht angeordnet ist.

9. Mehrstufiger Körper nach Anspruch 8, **dadurch gekennzeichnet, dass** durch Versatz der Position der Folgekanäle zu den vorangehenden Kanälen zusätzliche Prallflächen und Abrisskanten aus den nicht mit Seitenwandelementen, mit Prallflächen oder mit Abrisskanten der benachbarten Körperebenen belegten Teilen der Stirnseiten der Kanalseitenwandungen gebildet sind.

10. Mehrstufiger Körper nach Anspruch 9, **dadurch gekennzeichnet, dass** der einzelne Strömungskanal in einer Körperebene in zwei unterschiedliche Einzelkanäle der Folgeebene übergeht, um den Volumenstrom aufzuteilen.

11. Mehrstufiger Körper nach Anspruch 10, **dadurch gekennzeichnet, dass** die Einzelkanalverbindungen derart angeordnet sind, dass über die Körperebenen eine Druckverteilung, eine Temperaturverteilung und eine Volumenstromverteilung erfolgt.

12. Herstellung des Körpers nach mindestens einem der Ansprüche 1 bis 11 mit einem Verfahren der generativen Fertigung, insbesondere mit einem 3-dimensionalen Siebdruck und/oder mit einem 3-dimensionalen Pulverbettdrucken und/oder mit einem 3-dimensionalen Lasersintern und/oder einem 3-dimensionalen Laserschmelzen und/oder einem Filamentdrucken.

13. Herstellung des Körpers nach Anspruch 12, **dadurch gekennzeichnet, dass** der Körper aus Keramik, Glas, Metall, Kunststoff, organischen Stoffen oder Kompositen hergestellt wird.

14. Verwendung des Körpers nach mindestens einem der Ansprüche 1 bis 11 im Automotivbereich als Katalysatorträger oder als Filter oder als Kombikörper.

15. Verwendung des Körpers nach mindestens einem der Ansprüche 1 bis 11 im Energiebereich als Absorber oder Wärmetauscher.

16. Verwendung des Körpers nach mindestens einem der Ansprüche 1 bis 11 im Chemiebereich als chemischer Reaktor oder Chromatographiekörper.

17. Körper nach mindestens einem der Ansprüche 1 bis 11 zur Verwendung als medizinisches Implantat, als Wachstumsgerüst oder als Wäscher.

## Claims

1. Multi-stage body having a multiplicity of flow ducts, **characterized in that** the body has, in the individual flow duct in the flow direction, at least one turbulence-generating surface which forms a non-closed sub-duct and is connected to the duct wall and which, on flow entry, forms a baffle surface (1) and, on flow exit, forms a tear-off edge (2) for the flow, **in that** the body has a plurality of duct structures which are arranged in connection one after the other and form a stepped transition to one another in the flow direction, the baffle surface (1) and the tear-off edge (2) being arranged such that they occupy not more than 75 percent of the cross section of the individual flow duct, and **in that** the body is produced by generative production.

2. Multi-stage body according to claim 1, **characterized in that** a side wall element projects into each flow duct as baffle surface (1), which side wall element forms the baffle surface (1) on the flow entry side and the tear-off edge (2) on the exit side, and **in that** the baffle surfaces (1) and tear-off edges (2) serve to bring about a turbulent flow.

3. Multi-stage body according to claim 1 or 2, **characterized in that** the duct wall as catalyst support is coated with a catalytically active substance of the rare earths directly and/or via an intermediate support.

4. Multi-stage body according to claim 1 or 2, **characterized in that** the duct wall as catalyst support is coated with a catalytically active substance of the transition metals directly and/or via an intermediate support.

5. Multi-stage body according to claim 2, **characterized in that** the baffle surfaces (1) and tear-off edges (2) divide the individual flow duct into more than one sub-duct which are connected to one another and which each have an open side with respect to one another.

6. Multi-stage body according to claim 5, **characterized in that** the sub-ducts are formed in a flow duct have different levels of wall friction which serve to bring about rolling of the flow over the side walls in the flow direction.

7. Multi-stage body according to claim 6, **characterized in that** the baffle surfaces (1) and the tear-off edges (2) divide the flow duct into at least three sub-ducts which are open on one side and of which at least one sub-duct part has a larger throughflow area than the at least two remaining sub-flow ducts.

8. Multi-stage body according to one of claims 1 to 7, **characterized in that** the flow direction (Z) forming the body is divided into more than one plane, and **in that** each duct position of the following plane is arranged offset and/or rotated in the X direction and in the Y direction transversely to the flow direction with respect to the duct position of the preceding plane.

9. Multi-stage body according to claim 8, **characterized in that,** by offsetting the position of the following ducts with respect to the preceding ducts, additional baffle surfaces and tear-off edges are formed from those parts of the end sides of the duct side walls which are not occupied by side wall elements, with baffle surfaces or with tear-off edges of the adjacent body planes.

10. Multi-stage body according to claim 9, **characterized in that** the individual flow duct in one body plane merges into two different individual ducts of the following plane in order to divide the volume flow.

11. Multi-stage body according to claim 10, **characterized in that** the individual duct connections are arranged such that a pressure distribution, a temperature distribution and a volume flow distribution take place over the body planes.

12. Production of the body according to at least one of claims 1 to 11 by a method of generative production, in particular by a 3-dimensional screen printing and/or by a 3-dimensional powder bed printing and/or by a 3-dimensional laser sintering and/or a 3-dimensional laser melting and/or a filament printing.

13. Production of the body according to claim 12, **characterized in that** the body is produced from ceramic, glass, metal, plastic, organic substances or composites.

14. Use of the body according to at least one of claims 1 to 11 in the automotive sector as catalyst support or as filter or as combined body.

15. Use of the body according to at least one of claims 1 to 11 in the energy sector as absorber or heat exchanger.

16. Use of the body according to at least one of claims 1 to 11 in the chemical sector as chemical reactor or chromatographic body.

17. Body according to at least one of claims 1 to 11 for use as medical implant, as growth scaffold or as washer.

## Revendications

1. Corps à plusieurs étages comportant une pluralité de canaux d'écoulement, **caractérisé en ce que** ledit corps présente dans le sens d'écoulement, dans chaque canal d'écoulement, au moins une surface générant des turbulences, formant un sous-canal non fermé et reliée à la paroi de canal, laquelle surface forme pour l'écoulement une surface d'impact (1) à l'entrée d'écoulement et une arête de rupture (2) à la sortie d'écoulement, **en ce que** le corps présente plusieurs structures de canal qui sont disposées les unes après les autres en communication et forment une transition étagée dans le sens d'écoulement les unes par rapport aux autres, dans lequel la surface d'impact (1) et l'arête de rupture (2) sont disposées de sorte qu'elles n'occupent pas plus de 75 pour cent de la section transversale du canal d'écoulement individuel, et **en ce que** le corps est confectionné par fabrication générative.

2. Corps à plusieurs étages selon la revendication 1, **caractérisé en ce qu'un** élément de paroi latérale fait saillie dans chaque canal d'écoulement individuel en tant que surface d'impact (1), lequel élément de paroi latérale forme la surface d'impact (1) sur le côté entrée d'écoulement et l'arête de rupture (2) sur le côté sortie, et **en ce que** les surfaces d'impact (1) et les arêtes de rupture (2) servent à provoquer un écoulement turbulent.

3. Corps à plusieurs étages selon la revendication 1 ou 2, **caractérisé en ce que** la paroi de canal est revêtue, en tant que support de catalyseur, directement et/ou par l'intermédiaire d'un support intermédiaire, d'une substance à effet catalytique des terres rares.

4. Corps à plusieurs étages selon la revendication 1 ou 2, **caractérisé en ce que** la paroi de canal est revêtue, en tant que support de catalyseur, directement et/ou par l'intermédiaire d'un support intermédiaire, d'une substance à effet catalytique des métaux de transition.

5. Corps à plusieurs étages selon la revendication 2, **caractérisé en ce que** les surfaces d'impact (1) et les arêtes de rupture (2) divisent le canal d'écoulement individuel en plus d'un sous-canal qui sont en communication les uns avec les autres et qui possèdent respectivement un côté ouvert les uns par rapport aux autres.

6. Corps à plusieurs étages selon la revendication 5, **caractérisé en ce que** les sous-canaux formés dans un canal d'écoulement présentent des taux de friction sur parois de hauteurs différentes qui servent à provoquer un roulement de l'écoulement sur les parois latérales dans le sens d'écoulement.

7. Corps à plusieurs étages selon la revendication 6, **caractérisé en ce que** les surfaces d'impact (1) et les arêtes de rupture (2) divisent le canal d'écoulement en au moins trois sous-canaux ouverts d'un côté, dont au moins une partie de sous-canal présente une surface d'écoulement plus grande que les deux sous-canaux d'écoulement au moins restants.

8. Corps à plusieurs étages selon l'une des revendications 1 à 7, **caractérisé en ce que** le sens d'écoulement (Z) formant le corps est divisé en plus d'un plan et **en ce que** chaque position de canal du plan successif est disposée de manière à être décalée et/ou tournée par rapport à la position de canal du plan précédent, transversalement au sens d'écoulement dans la direction X et dans la direction Y.

9. Corps à plusieurs étages selon la revendication 8, **caractérisé en ce que,** en décalant la position des canaux successifs par rapport aux canaux précédents, des surfaces d'impact et des arêtes de rupture supplémentaires sont formées à partir des parties des côtés frontaux des parois latérales de canal qui ne sont pas recouvertes d'éléments de paroi latérale, de surfaces d'impact ou d'arêtes de rupture des plans voisins de corps.

10. Corps à plusieurs étages selon la revendication 9, **caractérisé en ce que** le canal d'écoulement individuel dans un plan de corps se prolonge en deux canaux individuels différents du plan successif afin de diviser le débit volumétrique.

11. Corps à plusieurs étages selon la revendication 10, **caractérisé en ce que** les raccordements de canal individuel sont disposés de telle sorte qu'une répartition de pression, une répartition de température et une répartition de débit volumétrique sont effectuées sur les plans de corps.

12. Confection du corps selon au moins l'une des revendications 1 à 11 par un procédé de fabrication générative, en particulier par une sérigraphie tridimensionnelle et/ou par une impression tridimensionnelle sur lit de poudre et/ou par un frittage tridimensionnel au laser et/ou par une fusion tridimensionnelle au laser et/ou par une impression par filaments.

13. Confection du corps selon la revendication 12, **caractérisée en ce que** le corps est confectionné en céramique, verre, métal, matière plastique, matières organiques ou composites.

14. Utilisation du corps selon au moins l'une des revendications 1 à 11 dans le domaine automobile sous forme de support de catalyseur ou sous forme de filtre ou sous forme de corps combiné.

15. Utilisation du corps selon au moins l'une des revendications 1 à 11 dans le domaine énergétique sous forme d'absorbeur ou d'échangeur de chaleur.

16. Utilisation du corps selon au moins l'une des revendications 1 à 11 dans le domaine chimique sous forme de réacteur chimique ou de corps chromatographique.

17. Corps selon au moins l'une des revendications 1 à 11, destiné à être utilisé sous forme d'implant médical, sous forme de squelette de croissance ou sous forme de laveur.
